# EUROPEAN PATENT APPLICATION

(11) **EP 4 563 535 A1**
(43) Date of publication of application: **04.06.2025**
(21) Application number: 23855026.3
(22) Date of filing: 29.06.2023
(51) Int. Cl.: C01G 53/10, C22B 3/00, C22B 3/08

(54) **METHOD FOR PRODUCING NICKEL SULFATE**

(30) Priority: 17.08.2022 KR 20220102821
(71) Applicant: SK innovation Co., Ltd., Seoul 03188 (KR)
(72) Inventor: LEE, Hyeon Hui, Daejeon 34124 (KR); PARK, Ji Yun, Daejeon 34124 (KR); SHIM, Su Hyang, Daejeon 34124 (KR); YOO, Su Min, Daejeon 34124 (KR); YOON, Keum Jung, Daejeon 34124 (KR)
(74) Representative: Thoma, Michael
(86) International application number: PCT/KR2023/009088
(87) International publication number: WO 2024/039055

(57) **Abstract**

A method for producing nickel sulfate according to embodiments of the present disclosure may prepare a raw material containing nickel. A first leachate may be produced by selectively leaching nickel from the raw material containing nickel using an oxidant. A second leachate may be produced by separating a residual metal from the first leachate. Thereafter, nickel sulfate may be obtained from the second leachate. Accordingly, unnecessary byproducts may be reduced by omitting a separate nickel extraction process.

## Description

### Technical Field

The embodiments of the present disclosure relate to a method for producing nickel sulfate, and more specifically, to a method for producing nickel sulfate from a raw material containing nickel.

### Background Art

Nickel is used in various fields such as an alloy for a magnet, filament, and the like, plating for corrosion prevention, a catalyst, adhesive carbide, a cathode material for a secondary battery and the like. In particular, nickel is actively used as a transition metal included in a cathode active material of a lithium secondary battery.

As expensive valuable metals including nickel are used in the cathode active material, 20% or more of manufacturing costs is required to manufacture the cathode material. In addition, as the environmental protection issues are recently emerging, research on a method for recycling the cathode active material is being conducted.

For example, nickel may be recovered in the form of nickel sulfate by leaching a waste cathode active material in a strong acid, and the recovered nickel sulfate may be used to manufacture the cathode active material again.

However, other transition metals such as manganese and iron may be included as impurities in the recovered nickel sulfate. In addition, an amount of unnecessary by-products produced may be increased due to sodium hydroxide used during extraction of nickel.

Therefore, a method for producing a high-purity nickel compound capable of increasing a yield of nickel while reducing the amount of by-products produced is required.

For example, Korean Patent Registration No. 10-1623930 discloses a process for leaching Ni, Co and Mn from a cathode material of a waste lithium ion battery.

### Summary

An embodiment of the present disclosure provides a method for producing nickel sulfate with improved productivity and purity.

In a method for producing nickel sulfate according to embodiments of the present disclosure, a nickel-containing raw material may be prepared. A first leachate, in which nickel is selectively leached from the nickel-containing raw material using an oxidant, may be produced. A second leachate may be produced by separating a residual metal from the first leachate. Nickel sulfate may be obtained from the second leachate.

In some embodiments, the nickel-containing raw material may include nickel (Ni)-mixed hydroxide precipitate (MHP).

In some embodiments, the Ni-MHP may further contain cobalt and manganese.

In some embodiments, in producing the first leachate, only nickel may be leached among nickel, cobalt and manganese included in the Ni-MHP.

In some embodiments, the oxidant may include metal persulfate.

In some embodiments, producing the first leachate may be performed under a condition of pH 2 or more using an acidic solution including the oxidant.

In some embodiments, in separating the residual metal to produce the second leachate, at least one of calcium and magnesium may be precipitated using a fluoride precipitant.

In some embodiments, in separating the residual metal to produce the second leachate, zinc may be precipitated or zinc may be extracted.

In some embodiments, the precipitating of zinc may be performed using a sulfide precipitant.

In some embodiments, the extracting of zinc may be performed using a phosphoric acid-based extractant.

In some embodiments, the nickel-containing raw material may be washed before producing the first leachate.

In some embodiments, calcium or magnesium contained in the nickel-containing raw material may be partially removed through washing the nickel-containing raw material.

In some embodiments, the washing of the nickel-containing raw material may be performed using water of 40°C to 100°C.

In some embodiments, the nickel sulfate may be crystallized into nickel sulfate hydrate.

According to embodiments of the present disclosure, nickel may be selectively extracted by inputting an acid solution and a metal salt oxidant to a nickel-containing mixed hydroxide precipitate. Accordingly, cobalt, manganese, and the like may be removed as residues, and an amount of acid solution and hydroxide used for separately extracting cobalt and manganese may be reduced.

In some embodiments, it is possible to form a second leachate in which residual metals such as magnesium, calcium, zinc, and the like are removed or reduced from the first leachate including nickel leached therein. Thereafter, high-purity nickel sulfate may be obtained from the second leachate through crystallization.

### Brief Description of Drawings

FIG. 1 is a schematic flowchart for describing a method for producing high-purity nickel sulfate according to embodiments of the present disclosure.
FIG. 2 is a schematic flowchart for describing a method for producing nickel sulfate according to a comparative example.

Embodiments of the present disclosure provide a method for producing nickel sulfate from a raw material containing nickel. For example, embodiments of the present disclosure may include a method for refining nickel from a nickel-containing product.

Hereinafter, embodiments of the present disclosure will be described in more detail with reference to the drawings. However, these embodiments are merely an example, and the present disclosure is not limited to the specific embodiments described herein.

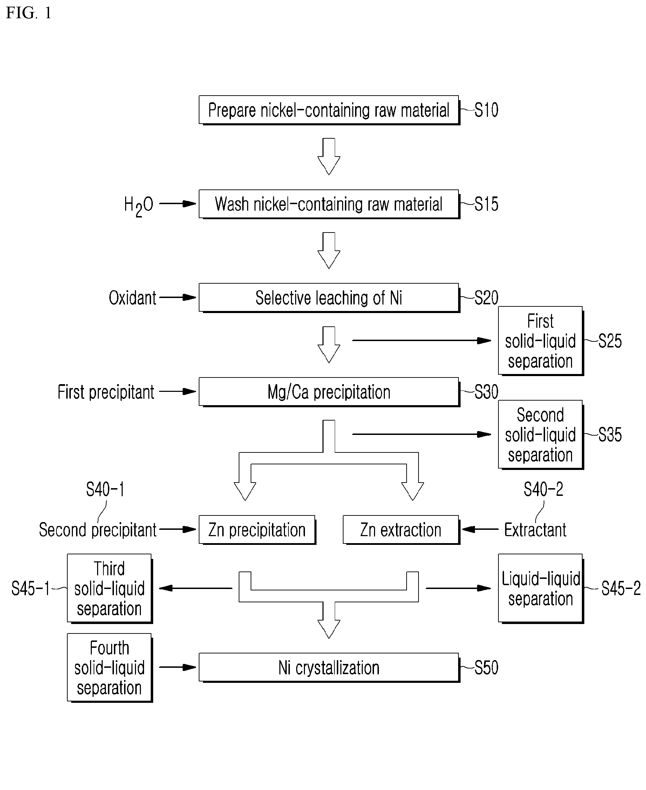

FIG. 1 is a schematic flowchart for describing a method for producing nickel sulfate according to embodiments of the present disclosure.

Referring to FIG. 1, a nickel (Ni)-containing raw material may be prepared (e.g., process S10).

In some embodiments, the nickel-containing raw material may be nickel (Ni)-mixed hydroxide precipitate (MHP) derived from ore. For example, the nickel-containing raw material may include a byproduct of wet refining of Ni oxide ore. The Ni-MHP may further include additional metals such as calcium (Ca), magnesium (Mg), cobalt (Co), manganese (Mn), aluminum (Al), iron (Fe), zinc (Zn), and the like other than nickel.

In some embodiments, the nickel-containing raw material may be collected from electrical/chemical products which contain nickel, such as a waste battery.

In some embodiments, the nickel-containing raw material may be washed (e.g., process S15). For example, the nickel-containing raw material may be subjected to a water washing treatment.

For example, the washing may be performed using water of 40°C or higher (e.g., 40°C to 100°C), or 60°C or higher (e.g., 60°C to 100°C). In one embodiment, the washing may be performed using water of 60°C to 80°C.

Using hot water in the above temperature range, Ca and/or Mg may be washed and partially removed from the nickel-containing raw material. As described above, using hot water having a temperature of 40°C or higher or 60°C or higher, Mg components (e.g., MgSO₄) and Ca components (e.g., CaSO₄) may be washed and removed with sufficient solubility.

In some embodiments, a ratio of a weight of water used in the washing process to a weight of the nickel-containing raw material may be 2 to 5, or 2.5 to 5. Within the above ratio range, a nickel-containing raw material in a slurry state for the subsequent process may be easily prepared, and partial removal of Ca and Mg may be substantially implemented.

For example, in process S20, nickel may be leached from the nickel-containing raw material using an oxidant having selectivity to nickel when selectively extracting the same.

In embodiments, the oxidant may include metal persulfate. For example, the oxidant may include sodium persulfate (Na₂S₂O₈). A sulfuric acid solution may be supplied to the nickel-containing raw material together with the oxidant to selectively leach nickel, thereby obtaining a first leachate.

In some embodiments, due to the leaching process, for example, solid-state residues may be produced. The residue may include Co, Mn, Al, Fe, and the like.

For example, the residues may be removed or separated through a first solid-liquid separation (e.g., process S25) to produce the first leachate from which Co, Mn, Al, and Fe are at least partially removed. In some embodiments, the first solid-liquid separation may be performed through a filter press or centrifugation.

In some embodiments, an amount of the oxidant used in the Ni leaching process may be 1.5% by weight ("wt%") to 7 wt% based on the weight of the nickel-containing raw material (e.g., the washed nickel-containing raw material). For example, 1.5 g to 7 g of the oxidant may be used based on 100 g of the nickel-containing raw material.

Within the above range, a separation efficiency of Co, Mn, Al and Fe may be improved while increasing the leaching rate of Ni.

In one embodiment, the amount of the oxidant may be 2 wt% to 7 wt%, or 4 wt% to 6 wt% based on the weight of the nickel-containing raw material.

In some embodiments, a molar ratio of sulfuric acid (H₂SO₄) to the number of moles of Ni included in the nickel-containing raw material may be 0.5 to 1. Within the above range, Co, Mn, Al and Fe may be removed in a sufficient amount from the nickel-containing raw material. In one embodiment, the molar ratio of sulfuric acid to the number of moles of Ni included in the nickel-containing raw material may be 0.7 to 0.9, or 0.7 to 0.8.

In some embodiments, another oxidant (e.g., hydrogen peroxide) other than the metal persulfate may not be used in the Ni leaching process. Accordingly, the selectivity of Ni may be increased.

In the Ni leaching process, input amounts of sulfuric acid and the oxidant (metal persulfate) may be adjusted so that the pH of the first leachate is 2 or more, 2.5 or more, or 3 or more. In one embodiment, the input amounts of the sulfuric acid and the oxidant may be adjusted so that the pH of the first leachate is 4 or more.

Within the pH range, selective extraction of Ni may be promoted. In some embodiments, the pH of the first leachate may be adjusted so as not to exceed 6. In one embodiment, the pH of the first leachate may be adjusted so as not to exceed 5. For example, the pH of the first leachate may be 2 to 6, 3 to 6, 4 to 6, or 4 to 5.

Thereafter, residual metals other than Ni included in the first leachate may be additionally separated or removed.

For example, in process S30, Ca and/or Mg may be at least partially removed from the first leachate through a first precipitation process.

According to embodiments, a first precipitant may be entered into the first leachate to precipitate Ca and/or Mg. In some embodiments, for example, the first precipitant may include a fluoride precipitant. The fluoride precipitant may include metal fluoride, for example, the metal fluoride may include alkali metal fluoride (e.g., NaF).

Accordingly, Ca and Mg may be precipitated from the first leachate in the form of calcium fluoride (CaF₂) and magnesium fluoride (MgF₂). The precipitated calcium fluoride and magnesium fluoride may be separated or removed through a second solid-liquid separation (e.g., process S35). The second solid-liquid separation may be performed, for example, through a filter press or centrifugation.

Through the second solid-liquid separation, a second leachate in which the amount(s) of Ca and/or Mg are/is reduced or removed from the first leachate may be obtained. For example, a second leachate in which Ca and/or Mg is substantially reduced or removed, may be obtained by using the first leachate in which Ca and/or Mg is partially removed through the washing process.

According to embodiments, processes of reducing/removing additional residual metals from the second leachate may be additionally performed. For example, a separation process of zinc (Zn) included in the second leachate may be further performed.

In some embodiments, in process S40-1, Zn may be at least partially removed from the first leachate through a second precipitation process.

According to embodiments, a second precipitant may be entered into the first leachate to precipitate Zn. In some embodiments, for example, the second precipitant may include a sulfide precipitant. The sulfide precipitant may include a metal sulfide and/or a non-metal sulfide. For example, the metal sulfide may include alkali metal sulfide (e.g., Na₂S), and the non-metal sulfide may include hydrogen sulfide (H₂S).

Accordingly, Zn may be precipitated from the first leachate in the form of zinc sulfide (ZnS). The precipitated zinc sulfide may be separated or removed through a third solid-liquid separation (e.g., process S45-1). The third solid-liquid separation may be performed through the filter press or centrifugation.

Through the third solid-liquid separation, a second leachate in which the amount of Zn is reduced or removed from the first leachate may be obtained.

In some embodiments, in process S40-2, Zn may be at least partially removed from the first leachate through an extraction process.

According to an embodiment, an extractant may be entered into the first leachate to extract Zn. In some embodiments, the extractant may include a phosphoric acid-based extractant. For example, the phosphoric acid-based extractant may include di-2-ethylhexyl phosphoric acid, 2-ethylhexyl phosphoric acid mono-2-ethylhexyl ester.

Accordingly, Zn may be extracted from the first leachate in the form of zinc sulfate (ZnSO₄). The extracted zinc sulfate may be separated or removed through liquid-liquid separation (e.g., process S45-2). The liquid-liquid separation may be performed through mixed sedimentation or centrifugal extraction.

Through the liquid-liquid separation, a second leachate in which the amount of Zn is reduced or removed from the first leachate may be obtained.

Thereafter, for example, in process S50, nickel sulfate hydrate may be obtained from the second leachate through concentration and/or crystallization process(s).

For example, water of the second leachate may be partially evaporated and concentrated, and then cooled, such that the nickel sulfate of the second leachate may be crystallized and precipitated in the form of nickel sulfate hydrate (e.g., NiSO₄·6H₂O). The precipitated nickel sulfate hydrate may be separated while retaining Na through a fourth solid-liquid separation. The fourth solid-liquid separation may be performed through a filter press or centrifugation.

Through the fourth solid-liquid separation, a nickel sulfate hydrate crystallized from the second leachate may be obtained.

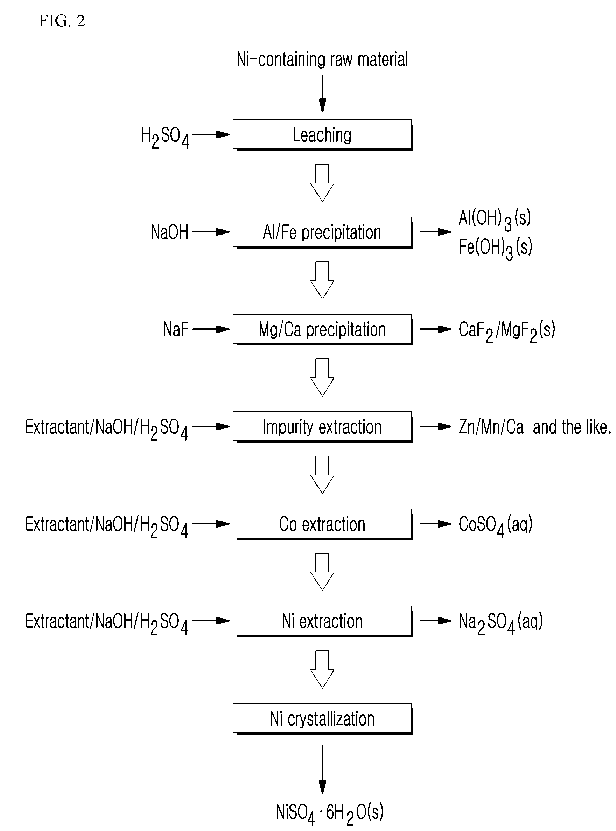

FIG. 2 is a schematic flowchart for describing, in sequence, a method for producing nickel sulfate according to a comparative example. The comparative example described below with reference to FIG. 2 is provided to describe effects of the process concept of FIG. 1 in more detail, and is not intended to exclude it from the scope of the present disclosure. For example, the steps/processes included in FIG. 2 may also be included in e embodiments of the present disclosure.

Referring to FIG. 2, a nickel (Ni)-containing raw material may be prepared.

The nickel-containing raw material may be leached using sulfuric acid to obtain a leachate.

Sodium hydroxide (NaOH) may be entered into the leachate to precipitate Al and/or Fe. Accordingly, Al and Fe may be precipitated from the leachate in the form of aluminum hydroxide (Al(OH)₃) and iron hydroxide (Fe(OH)₃). The precipitated aluminum hydroxide and iron hydroxide may be separated or removed through solid-liquid separation, such that a first solution in which the amount(s) of Al and/or Fe are/is reduced or removed may be obtained.

An alkali metal fluoride (e.g., NaF) may be entered into the first solution to precipitate Ca and/or Mg. Accordingly, Ca and Mg may be precipitated from the first solution in the form of calcium fluoride (CaF₂) and magnesium fluoride (MgF₂). The precipitated calcium fluoride and magnesium fluoride may be separated or removed through the solid-liquid separation, to obtain a second solution in which the amount(s) of Ca and/or Mg are/is reduced or removed.

Zn, Mn and/or Ca may be extracted from the second solution using a phosphoric acid-based extractant. An alkaline compound such as sodium hydroxide is used together with the phosphoric acid-based extractant for saponification of the extractant, and sulfuric acid is used together, such that Zn, Mn and Ca may be extracted from the second solution in the form of zinc sulfate (ZnSO₄), manganese sulfate (MnSO₄) and calcium sulfate (CaSO₄).

The extracted zinc sulfate, manganese sulfate and calcium sulfate may be separated or removed through liquid-liquid separation, to obtain a third solution in which the amount(s) of Zn, Mn and/or Ca are/is reduced or removed.

The above-described phosphoric acid-based extractant, sodium hydroxide and sulfuric acid may be entered into the third solution to extract Co.

Therefore, Co may be extracted from the leachate in the form of cobalt sulfate (CoSO₄). The extracted cobalt sulfate may be separated or removed through liquid-liquid separation, such that a fourth solution in which the amount of Co is reduced or removed may be obtained.

The acidic extractant, sodium hydroxide and sulfuric acid may be entered into the above-described fourth solution to extract Ni. The acidic extractant may include a phosphoric acid-based extractant or a carboxylic acid-based extractant.

Accordingly, Ni may be extracted from the leachate in the form of nickel sulfate (NiSO₄). The extracted nickel sulfate may be separated through liquid-liquid separation to obtain an aqueous nickel sulfate solution including nickel sulfate.

The aqueous nickel sulfate solution may be partially concentrated and crystallized to obtain nickel sulfate in the form of nickel sulfate hydrate.

As described above, according to the comparative example, sodium hydroxide is used to prevent a decrease in the pH. Accordingly, sodium derived from the sodium hydroxide is concentrated and unnecessary by-products (e.g., Na₂SO₄) are produced. In addition, different types of acid extractants are used for continuous/sequential extraction of different metals, and a plurality of extraction processes are included for the separation of different metals such as Mn, Co, Ni, and the like.

However, according to embodiments described with reference to FIG. 1, Co, Mn, and the like may be removed or separated as residues in the leaching process (e.g., process S20). Accordingly, for example, sodium derived from sodium hydroxide may be reduced, such that an additional Ni extraction process may be omitted. In addition, the amount of unnecessary byproducts (e.g., Na₂SO₄) produced may be reduced.

Hereinafter, specific experimental examples are proposed to facilitate understanding of the embodiments of the present disclosure. However, the following examples are only given for illustrating the embodiments and are not intended to limit the appended claims. It will be apparent those skilled in the art that various alterations and modifications are possible within the scope and spirit of the present disclosure, and such alterations and modifications are duly included in the appended claims. Furthermore, the embodiments may be combined to form additional embodiments.

### Example 1

150 g of water at 80°C was input into 50 g of Ni-MHP, followed by washing the same for 4 hours to obtain a nickel-containing mixed hydroxide precipitate including metals in a content as described in Table 1 below.

15 g of 2M sulfuric acid and 2.9 g of sodium persulfate (Na₂S₂O₈) as an oxidant were added into the washed nickel-containing mixed hydroxide precipitate, and leached under a condition of 80°C for 6 hours to obtain a first leachate.

### Example 2

A first leachate was obtained by performing the same process as in Example 1 except that the amount of oxidant used was adjusted as described in Table 2.

### Example 3

A first leachate was obtained by performing the same process as in Example 1 except that the amount of sulfuric acid used was adjusted as described in Table 2.

### Example 4

A first leachate was obtained by performing the same process as in Example 1 except that the amount of sulfuric acid used was adjusted as described in Table 2.

### Example 5

A first leachate was obtained by performing the same process as in Example 1 except that the amount of sulfuric acid used was adjusted as described in Table 2.

### Example 6

A first leachate was obtained by performing the same process as in Example 1 except that the amount of sulfuric acid used and the amount of oxidant used were adjusted as described in Table 2.

### Comparative Example 1

A first leachate was obtained by performing the same process as in Example 1 except that the amount of sulfuric acid used was adjusted as described in Table 2 and an oxidant was not input.

### Comparative Example 2

A first leachate was obtained by performing the same process as in Example 1 except that the amount of sulfuric acid used was adjusted as described in Table 2, an oxidant (sodium persulfate) was not input, and 2.25 g of hydrogen peroxide (H₂O₂) was input.

**TABLE 1**

| | Sulfuric acid margin (mol-H₂SO₄/mol-Ni) | Amount of sulfuric acid used (g) | Amount of hydrogen peroxide used (g) | Amount of oxidant used (g) |
|---|---|---|---|---|
| Example 1 | 0.75 | 15 | 0.0 | 2.9 |
| Example 2 | 0.75 | 15 | 0.0 | 2.1 |
| Example 3 | 0.80 | 16 | 0.0 | 2.9 |
| Example 4 | 0.70 | 14 | 0.0 | 2.9 |
| Example 5 | 0.90 | 18 | 0.0 | 2.9 |
| Example 6 | 0.90 | 18 | 0.0 | 0.85 |
| Comparative Example 1 | 1.30 | 26 | 0.0 | 0.0 |
| Comparative Example 2 | 1.30 | 26 | 2.25 | 0.0 |

### Experimental Example 1

### (1) Measurement of calcium and magnesium content after washing process

As a result of confirming contents of Ca and Mg in the liquid product after the washing process through inductively coupled plasma (ICP) analysis, the contents of Ca and Mg were 280 wt ppm and 780 wt ppm, respectively, which are levels of 46 wt% for Ca and 23 wt% for Mg, respectively, compared to the Ca and Mg in the nickel-containing mixed hydroxide precipitate before the washing process.

### (2) Measurement of extraction rate of impurities from leachate

Weights of Co, Mn, Mg, Fe, Zn, Ca and Al of the nickel-containing mixed hydroxide precipitate and weights of Co, Mn, Mg, Fe, Zn, Ca and Al of the first leachate were measured, and the weights of the metals of the first leachate relative to the weights of the metals of the nickel-containing mixed hydroxide precipitate were calculated as wt% for each metal.

### (3) Measurement of metal concentration and pH in first leachate

Concentrations of Co, Mn, Mg, Fe, Zn, Ca, Al and Na in the first leachate were calculated as wt% for each metal in terms of the weights of the metals in the first leachate relative to the weight of the first leachate.

In addition, the pH in the first leachate was measured.

Measurement results are shown in Tables 3 and 4 below.

**TABLE 3**

| | Leaching rate of impurities (wt%) | | | | | | |
|---|---|---|---|---|---|---|---|
| | Co | Mn | Mg | Fe | Zn | Ca | Al |
| Example 1 | 0 | 0 | 78 | 0 | 56 | 65 | 0 |
| Example 2 | 3 | 0 | 75 | 0 | 50 | 59 | 0 |
| Example 3 | 3 | 0 | 80 | 0 | 70 | 69 | 10 |
| Example 4 | 0 | 0 | 72 | 0 | 42 | 55 | 0 |
| Example 5 | 56 | 0 | 86 | 24 | 79 | 76 | 57 |
| Example 6 | 79 | 11 | 83 | 1 | 70 | 72 | 39 |
| Comparative Example 1 | 90 | 28 | 91 | 77 | 87 | 81 | 69 |
| Comparative Example 2 | 97 | 97 | 99 | 92 | 91 | 88 | 75 |

**TABLE 4**

| | Concentration of metal in first leachate (wt%) | | | | | | | | | pH |
|---|---|---|---|---|---|---|---|---|---|---|
| | Ni | Co | Mn | Mg | Fe | Zn | Ca | Al | Na | |
| Example 1 | 8.15 | 0.00 | 0.00 | 0.24 | 0.00 | 0.032 | 0.025 | 0.000 | 0.370 | 4.30 |
| Example 2 | 7.96 | 0.02 | 0.00 | 0.23 | 0.00 | 0.029 | 0.023 | 0.000 | 0.250 | 4.40 |
| Example 3 | 8.14 | 0.01 | 0.00 | 0.22 | 0.00 | 0.037 | 0.024 | 0.004 | 0.390 | 2.71 |
| Example 4 | 7.52 | 0.00 | 0.00 | 0.24 | 0.00 | 0.025 | 0.024 | 0.000 | 0.390 | 5.89 |
| Example 5 | 7.71 | 0.22 | 0.00 | 0.21 | 0.05 | 0.036 | 0.023 | 0.017 | 0.320 | 1.43 |
| Example 6 | 7.82 | 0.32 | 0.06 | 0.21 | 0.00 | 0.033 | 0.023 | 0.012 | 0.086 | 2.59 |
| Comparative Example 1 | 6.00 | 0.26 | 0.10 | 0.16 | 0.11 | 0.029 | 0.018 | 0.015 | 0.000 | 0.38 |
| Comparative Example 2 | 6.08 | 0.26 | 0.32 | 0.16 | 0.12 | 0.028 | 0.018 | 0.015 | 0.000 | 0.47 |

Referring to Tables 3 and 4, when leaching the nickel-containing hydroxide precipitate, if an oxidant was used, a first leachate in which leaching rates of Co, Mn, Fe and Al were reduced was obtained. According to the examples, when the pH of the first leachate was adjusted to 3 or more and less than 5, the leaching rates of Co, Mn, Fe and Al in the first leachate were 3 wt% or less. Therefore, selective leaching of nickel was possible, which does not require an additional process for removing cobalt and manganese.

In Example 3, where the pH of the first leachate was less than 3, the leaching rate of Al was relatively increased.

In Example 4, where the pH of the first leachate was 5 or higher, the leaching rates of Ni and Zn were relatively reduced.

In Example 5, where the pH of the first leachate was less than 2, the leaching rates of Co, Fe and Al were relatively increased.

In Example 6, where the pH of the first leachate was less than 3 and the amount of oxidant input was reduced, the leaching rates of Co, Mn and Al were relatively increased.

In Comparative Example 1, where the pH of the first leachate was less than 1 and an oxidant was not added, all leaching rates of Co, Mn, Fe and Al were increased compared to the examples.

In Comparative Example 2, where the pH of the first leachate was less than 1 and sodium persulfate was not added and hydrogen peroxide (H₂O₂) was added, all leaching rates of Co, Mn, Fe and Al were increased compared to the examples.

### Experimental Example 2: Measurement of Ca and Mg concentrations and pH in leachate

### Experimental Example 7

50 g of Ni-MHP, 15 g of 2M sulfuric acid, and 2.9 g of sodium persulfate (Na₂S-₂O₈) as an oxidant were added into a nickel-containing mixed hydroxide precipitate without washing, and leached under a condition of 80°C for 6 hours to obtain a first leachate.

The first leachate was precipitated for 4 hours using 1.15 g of sodium fluoride (NaF) as a precipitant to obtain a second leachate.

### Example 8

A second leachate was obtained by performing the same process as in Example 1 except that 1.4 g of sodium fluoride was used.

Concentrations of Mg and Ca in the second leachates of Examples 7 and 8 were calculated in wt ppm. In addition, the pH in the leachate was measured.

Measurement results are shown in Table 5 below.

**TABLE 5**

| | First leachate | Example 7 | Example 8 |
|---|---|---|---|
| Amount of NaF used (g) | - | 1.15 | 1.4 |
| Concentration of Ca (wt ppm) | 380 | 24 | 10 |
| Removal rate of Ca (wt%) | - | 94 | 98 |
| Concentration of Mg (wt ppm) | 3100 | 260 | 77 |
| Removal rate of Mg (wt %) | - | 92 | 98 |
| pH | 4.3 | 4.3 | 5.26 |

Referring to Table 5, when sodium fluoride (NaF) was used to precipitate Ca and Mg in the first leachate of the nickel-containing hydroxide precipitate in which nickel was selectively leached, the second leachate was obtained in which 90 wt% or more of Ca and Mg were removed compared to the first leachate.

## Claims

1. A method for producing nickel sulfate, the method comprising:
preparing a nickel-containing raw material;
producing a first leachate in which nickel is selectively leached from the nickel-containing raw material using an oxidant;
separating a residual metal from the first leachate to produce a second leachate; and
obtaining nickel sulfate from the second leachate.

2. The method for producing nickel sulfate according to claim 1, wherein the nickel-containing raw material comprises nickel (Ni)-mixed hydroxide precipitate (MHP).

3. The method for producing nickel sulfate according to claim 2, wherein the Ni-MHP further contains cobalt and manganese.

4. The method for producing nickel sulfate according to claim 3, wherein the process of producing a first leachate comprises leaching only nickel among nickel, cobalt and manganese included in the Ni-MHP.

5. The method for producing nickel sulfate according to claim 1, wherein the oxidant comprises metal persulfate.

6. The method for producing nickel sulfate according to claim 1, wherein the process of producing a first leachate is performed under a condition of pH 2 or more using an acidic solution including the oxidant.

7. The method for producing nickel sulfate according to claim 1, wherein the process of separating a residual metal to produce a second leachate comprises precipitating at least one of calcium and magnesium using a fluoride precipitant.

8. The method for producing nickel sulfate according to claim 7, wherein the process of separating a residual metal to produce a second leachate further comprises precipitating zinc or extracting zinc.

9. The method for producing nickel sulfate according to claim 8, wherein the precipitating of zinc is performed using a sulfide precipitant.

10. The method for producing nickel sulfate according to claim 8, wherein the extracting of zinc is performed using a phosphoric acid-based extractant.

11. The method for producing nickel sulfate according to claim 1, further comprising washing the nickel-containing raw material before the process of producing a first leachate.

12. The method for producing nickel sulfate according to claim 11, wherein the process of washing the nickel-containing raw material comprises partially removing calcium or magnesium contained in the nickel-containing raw material.

13. The method for producing nickel sulfate according to claim 11, wherein the process of washing the nickel-containing raw material is performed using water of 40°C to 100°C.

14. The method for producing nickel sulfate according to claim 1, wherein the process of obtaining nickel sulfate comprises crystallizing the nickel sulfate into nickel sulfate hydrate.
